(19) Europäisches Patentamt
European Patent Office
Office européen des brevets

(11) **EP 2 720 074 A2**

(12) **EUROPEAN PATENT APPLICATION**

(43) Date of publication:
**16.04.2014 Bulletin 2014/16**

(51) Int Cl.:
***G02B 21/00*** (2006.01)

(21) Application number: **13188497.5**

(22) Date of filing: **14.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.10.2012 US 201261713211 P**

(71) Applicant: **Spectral Applied Research Inc.**
**Ontario L4B 3L8 (CA)**

(72) Inventor: **Berman, Richard**
**Richmond Hill, Ontario L4B 3L8 (CA)**

(74) Representative: **Moore, Barry et al**
**Hanna Moore & Curley**
**13 Lower Lad Lane**
**Dublin 2 (IE)**

(54) **Spatial Filter to Combine Excitation Light and Emission Light in an Episcopic Multiplexed Confocal Scanning Microscope**

(57)  In an episcopic multiplexed confocal scanning microscope system (400, 450, 500, 600, 700, 800, 900, 1000), a spatial filter (432, 514, 632) is placed at a conjugate plane (448) to a back aperture plane (446) at a back aperture of an objective lens (412). The spatial filter is used to combine excitation light and emission light from a multiplexed confocal microscope module (406).

Figure 4-1

**Description**

**TECHNICAL FIELD**

The technology relates generally to episcopic optical microscopes, and more particularly to fluorescence imaging microscopes and to scanning confocal optical microscopes.

**BACKGROUND**

Episcopic microscopy is defined as the use of a microscope system whereby the illumination light illuminates the sample through the objective lens of the microscope for the observation of scattered light. The scattered light may be elastically scattered at the same wavelength as the illumination wavelength or inelastically scattered at a different wavelength. Scattered light from the sample may be collected by the same objective lens and directed towards an eyepiece of the microscope or towards an imaging device, such as a camera.

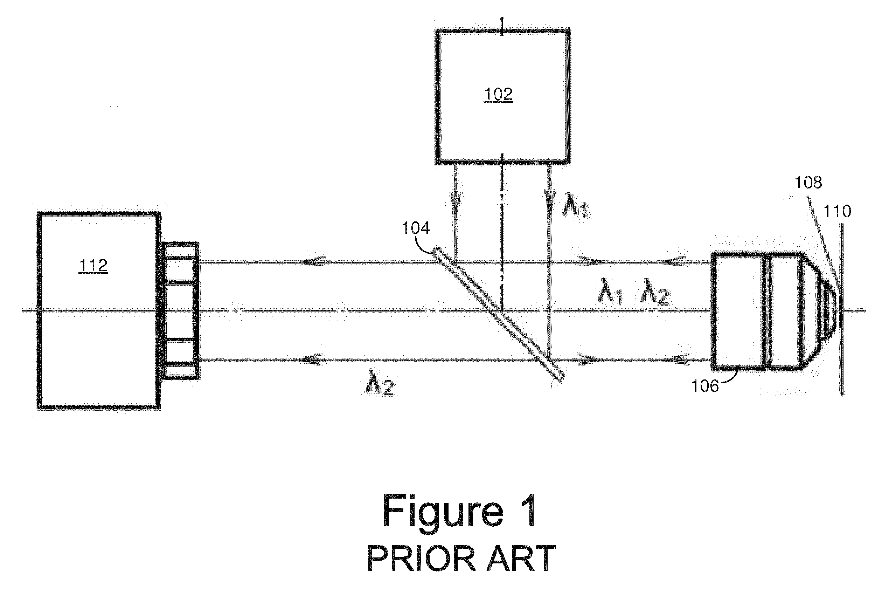

In episcopic imaging, the illumination light path and the scattered light path are typically combined by a beam splitting optic in the form of a half-silvered mirror or a cube beam splitter, for example. In one example, the half-silvered mirror reflects the illumination light and transmits the scattered light. This is illustrated in the example wide-field microscope system of Figure 1. Illumination light having a wavelength $\lambda_1$ is transmitted from a light source 102 and reflected by a beam splitter 104 through an objective lens 106 of a microscope and onto a sample 108 in a sample plane 110. Scattered light having a wavelength $\lambda_2$ is collected by the objective lens 106 of the microscope. Where the wavelength $\lambda_2$ of the scattered light differs from the wavelength $\lambda_1$ of the illumination light, that is where $\lambda_2 \neq \lambda_1$, the scattered light may be transmitted, via the beam splitter 104, to an imaging device 112 with an optional tube lens (not shown).

The word "combine", as used herein, may refer to the joining or coupling of the illumination light path with the scattered light path in one direction, and the splitting or separating of the illumination light path from the scattered light path in another direction. In the example of Figure 1, the path of the illumination light, as it is being transmitted toward the microscope objective lens 106, is being combined with the scattered light path via the beam splitter 104. Conversely, the scattered light, as it is coming from the microscope objective lens 106, is being split from the illumination light by the beam splitter 104.

It is noted that the illumination light path and the scattered light path are mutually interchangeable. For example, the positions of the light source 102 and the imaging device 112 may be switched relative to one another, and the beam splitter 104 may be used to transmit the illumination light, and to reflect the scattered light.

Use of the beam splitter 104 may result in high losses of illumination or excitation light, as well as scattered light. In one example, at least half of the illumination or excitation light may be lost when it is reflected by the beam splitter 104, and at least half of the scattered light may be lost when it is being transmitted through the beam splitter 104. Therefore, use of the half-silvered beam splitter 104 in an episcopic microscope may result in a significant portion being lost, for example 50% of the excitation light and 50% of the scattered light.

The optical setup of Figure 1 with the half-silvered beam splitter 104 may be used for fluorescence imaging with the addition of a narrowband filter (not shown) between the beam splitter 104 and the imaging device 112. A narrowband filter may be used to suppress elastically scattered light having a wavelength $\lambda_2 = \lambda_1$ and to transmit inelastically scattered light having a wavelength $\lambda_2 \neq \lambda_1$. Given that fluorescence microscopy is often done with weak or very sensitive samples that result in minimal fluorescence light being emitted, the inefficiency of the half-silvered beam splitter 104 may be unacceptable for such applications.

In fluorescence imaging, the illumination or excitation light path and the scattered or emission light path are typically combined by a dichroic mirror. In the example illustrated in Figure 1, in the event that the beam splitter 104 is a dichroic mirror, the dichroic mirror 104 may reflect the illumination light and transmit the scattered light. Illumination light having a wavelength $\lambda_1$ is transmitted from the light source 102 and reflected by the dichroic mirror 104 through the objective lens 106 of the microscope and onto the sample 108 in the sample plane 110. Fluorescence emission light having a wavelength $\lambda_2$ that differs from the wavelength $\lambda_1$, that is $\lambda_2 \neq \lambda_1$, is collected by the objective lens 106 of the microscope and transmitted, via the dichroic mirror 104, to the imaging device 112.

The wavelength structure of the dichroic mirror 104 may be designed to work with one or more wavelength bands of illumination light and one or more wavelength bands of scattered light. However, such dichroic mirrors rarely work for all the wavelengths of interest. Thus, it is common for multiple dichroic mirrors to be mounted in a mirror turret or mirror wheel so that different dichroic mirrors can be selected for different wavelength requirements.

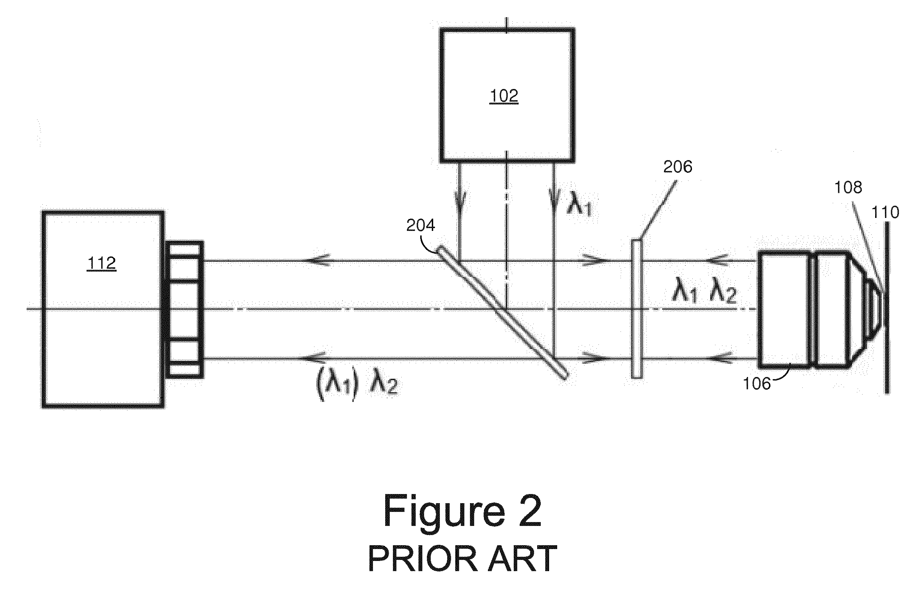

As an alternative to the use of half-silvered mirrors or dichroic mirrors, some systems may combine scattered and illumination light bands using a polarization beam splitter. This may be done with linearly polarized light or circularly polarized light. Figure 2 illustrates the combining of illumination and scattered light using a polarizing beam splitter 204 and a quarter wave plate 206. In this implementation, only light that retains the circular polarization is passed back through the polarizer 204.

While such techniques may be used effectively for elastically scattered light, fluorescence scattering is generally unpolarized. Therefore, using a polarizing beam splitter on fluorescence scattering may result in a significant portion - at least half - of the scattered light being lost. The inefficiency of a polarizing beam splitter may be unacceptable for such applications, because of the reasons mentioned above.

Figure 3 illustrates another technique, as described in U.S. Patent No. 6,888,148, for spatial coupling of illumination and scattered light paths. This technique, which is also described in German Patent No. 679547, U.S. Patent No. 3,229,564, and U.S. Patent No. 4,314,763, involves the use of a spatial filter in the form of a small mirror or prism, also known as a "pick-off" mirror or prism, placed in the back focal plane of a microscope lens.

A collimated illumination light beam may be transmitted from a light source 302 and focused by a lens 308 onto the back focal plane 306 of an objective lens 310 of a microscope. The illumination light beam may be reflected by a pickoff mirror 304 toward the objective lens 310. The illumination light is focused by the objective lens 310 onto a sample 312 to achieve a dark-field illumination of the sample 312. The light reflected by the sample 312 may be collected by the objective lens 310. An aperture of the objective lens 310 is located at the back focal plane 306. The majority of the light collected by the objective lens 310 may be transmitted, via an optional tube lens 314, to an imaging device 316, thus providing a dark-field image of the same 312 at an image plane 318 coinciding with an image sensor of the imaging device 316.

As a result of the pick-off mirror 304, a portion of the light collected by the objective lens 310 is blocked from being transmitted to the imaging device 316. The size of the pick-off mirror 304 may be substantially smaller than the size of the aperture of the objective lens 310 at the back focal plane 306.

In all of the microscope systems described herein, the illumination light path and the scattered light path may be mutually interchangeable. That is, the half-silvered mirror or the dichroic mirror and the polarizing beam splitter may be used to transmit the illumination light, and to reflect the scattered light. The same is true for the spatial beam coupler, in the case that the illumination light beam is focused onto the back focal plane of the objective lens through an opening in a high reflection mirror, which reflects the scattered light to the imaging device.

High-resolution confocal laser microscopy is an established field in modern imaging and bioimaging technologies. This technique provides sharp, high-magnification, three-dimensional imaging with submicron resolution by non-invasive optical sectioning and rejection of out-of-focus information (see, T. Corle and G. Kino, "Confocal Scanning Optical Microscopy and Related Imaging Systems," Academic Press, San Diego, 1996).

A point scanning confocal system images a single point at a time. Light is projected onto the sample through a single illumination aperture, such as a pinhole. Light from the focal plane of the sample then passes through the same pinhole or a conjugate pinhole to reject out-of-focus light. The rejection of out-of-focus light is a significant advantage of a confocal imaging system as it provides an uncluttered image of the focal plane.

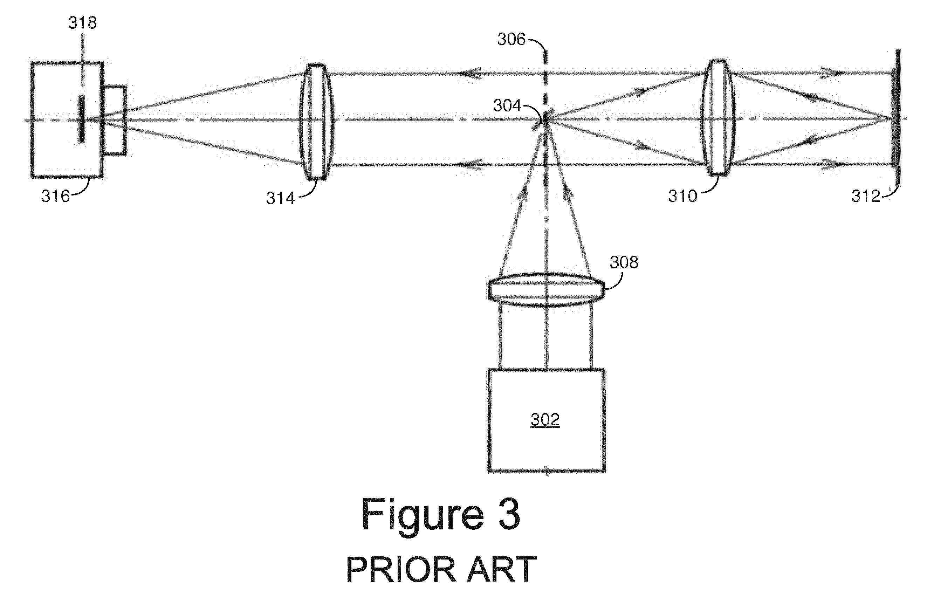

In episcopic confocal imaging, the illumination light path and the elastically scattered light path may be combined by a half-silvered mirror or dichroic beam splitter, or by use of a polarization beam splitter. A system with a spatial coupling/separation of the illumination light path and the scattered light path provides a nearly collimated beam that illuminates a total field of view of the objective lens, as illustrated in Figure 3. This system cannot be used to provide a focused light spot on the sample, and therefore is not applicable to single point confocal scanning imaging.

Multi-point confocal systems employ a similar principle, but image multiple points in the sample plane simultaneously. These multi-point confocal systems typically use an array of pinholes or other illumination apertures that simultaneously capture multiple points of the image. Some models of confocal systems use a spinning disk with pinholes arranged in a pattern, such as a Nipkow pattern, to provide uniform illumination of the sample. Examples of a confocal scanner employing the conventional Nipkow disk method have been described in U.S. Patent No. 3,926,500 and U.S. Patent No. 4,927,254. Another example of a confocal scanner employing a two-dimensional array of pinholes that translate in a plane of the array is described in U.S. Patent No. 4,806,004. Multi-point confocal systems have become important microscopy tools, for example, in life science research. They are seen as simple, cost effective instruments that acquire images quickly and with less damaging effects on samples than point scanning systems.

In a conventional apparatus for confocal scanning microscopy such as that described above, the pinhole disk of the confocal optical scanner unit thereof may be tilted to reduce the amount of surface reflection from the pinhole disk surface into an imaging device.

The use of optical fibers as flexible laser delivery subsystems has proven particularly useful in confocal microscopy, and is described, for example, in JP0420912, U.S. Patent No. 5,557,452, U.S. Patent No. 8,275,226, and U.S. Patent Application Publication No. 20110134519.

## SUMMARY

Previous implementations of spinning disk systems do not use collimated light for illumination. (Rather, spinning disk systems that use lenslet arrays typically focus light through the pinholes, where the numerical aperture of the lenslets is chosen to fill the back aperture of the objective. In that case, the focused light passing through the pinholes is necessarily uncollimated.) Single disk confocal instruments have traditionally been designed for use with large area light sources such as light pipes or arc lamps. Large area light sources are not conducive to creating collimated light. As known in the art, the back aperture of the objective must be filled in order to achieve resolution at the diffraction limit. In the absence of a pinhole disk, collimated light at an image plane will focus to a small spot at the back aperture of the objective. To persons of ordinary skill in the art, this is a perceived barrier to using collimated light with spinning disk systems.

It is also known in the art that placing a small pick-off member, for example, a small pick-off mirror, in an illumination path will necessarily produce collimated light. Thus it is not known and it is not obvious to place a small pick-off member, for example, a small pick-off mirror, at a conjugate plane to the back aperture of the objective of a spinning disk system, because the small pick-off member will necessarily illuminate the pinholes of the spinning disk with collimated light.

Notwithstanding the foregoing, this document describes methods and arrangements in which a spatial filter (for example, a small pick-off member, or a perforated mirror comprising a window) is placed at a conjugate plane to the back aperture (back focal plane) of the objective of a multiplexed confocal scanning microscope system. In these methods and arrangements, illumination apertures of a scanning disk are necessarily illuminated with collimated light. Through experimentation, the inventors discovered that it is in fact not only possible to use collimated light for illumination but it can be advantageous. This was a surprising and unexpected result. The inventors discovered that diffraction of light by the pinholes filled an area of the back aperture of the objective that was sufficient to project a resolved pinhole to the sample plane, within the resolving power of the objective. Thus the filled area of the back aperture of the microscope objective is determined by the size of the pinholes, and the use of collimated light will work for all sizes of pinholes. This makes it possible to match the pinhole size to the objective resolving power and optimally fill the objective under all conditions.

The area of the spatial filter may be substantially smaller than the area of the image of the back aperture at the conjugate plane. For example, the area of the spatial filter may be approximately 5% of the area of the back aperture image. In another example, the area of the spatial filter may be approximately 10% of the area of the back aperture image. In yet another example, the area of the spatial filter may be approximately 15% of the area of the back aperture image. In a further example, the area of the spatial filter may be approximately 20% of the area of the back aperture image.

In the methods and arrangements described in this document, the presence of the spatial filter enables illumination light in a multiplexed confocal scanning microscope system to be efficiently separated from scattered light, such as fluorescence light or luminescence light excited and/or backscattered in a specimen. In contrast to the above-described prior art techniques, the separation is not wavelength-dependent and is therefore particularly suitable for use in multi-wavelength fluorescence microscopy, for example, for the simultaneous excitation of different dyes. Accordingly, fast switching between several excitation wavelengths or spectral detection wavelength ranges - so-called multitracking - may be achieved in a particularly simple manner.

In accordance with the technology described herein, there is provided a multiplexed confocal scanning microscope system which comprises a scanning disk with a plurality of pinholes arranged in a predetermined pattern, such as a spiral path. The combining of the illumination light and the scattered light may be achieved through the use of a beam combining module, which may comprise a spatial filter, for example, a small pick-off member or a perforated mirror comprising a window.

In one example, illumination light originating from a light source may be focusing onto a small pick-off member having an aperture conjugate to a back focal plane of an objective lens of the confocal microscope. The illumination light is reflected by the pick-off member and collimated by a lens providing a collimated or a nearly collimated beam of light illuminating a surface of the scanning pinhole disk. The surface of the scanning pinhole disk is arranged to coincide with a first image plane that is conjugate to a plane of a specimen or sample to be imaged.

The pinholes of the scanning pinhole disk diffract the impinging light and the incident beam is split by the scanning disk into an array of individual narrow diffracted beams which travel through an optional field lens and a tube lens and converge on the objective lens.

Each individual beam may be focused onto the sample plane, providing an array of diffraction limited focal spots. The pinhole array disk may be rotated at a constant speed, and since the pinholes are arranged along the spiral path and since the plane of the pinhole array disk is conjugate to the sample plane, the rotation of the disk forms a raster scan across the sample. The light focused on the multiple points of the sample may be scattered by the sample, captured by the objective lens at its operating numerical aperture $NA_{MS}$ and focused back at the same pinholes. Most of the light passing through the pinholes and used to create an image of the back aperture of the objective lens may continue unimpeded to a second image plane, where it may be captured by a high sensitivity imaging device, such as a camera. However, a small portion of the light will be obstructed by the pick-off member. The sample plane, the first image plane, and the second image plane are conjugate.

The light that continues unimpeded by the pick-off member is focused with a relay system onto the second image plane, which coincides with an image sensor of the camera, providing an array of diffraction limited focal spots. Rotation of the pinhole array disk forms a raster image, thus providing a magnified confocal image of the sample for detection by the image sensor.

In another example, the illumination light path and the imaging light path may be mutually interchanged. In this case, illumination light originating from a light source may be focusing onto a window in a high reflection perforated mirror, where the window is located at a plane conjugate to a back focal plane of the objective lens. The illumination light transmitted through the window is ultimately used by the multiplexed confocal microscope to illuminate a sample. The scattered light from the sample is ultimately reflected to the imaging device by the high reflection mirror.

In another example, illumination light from a light source may be delivered to the beam combining module by a flexible light delivery subsystem, for example, in the form of an optical fiber. Different configurations may be used to provide Köhler illumination of a sample, or critical illumination of the sample.

The efficiency of the illumination may be improved, for example, by using a light source module and a beam combining module having optics that are configured to provide a magnification such that an area of substantially uniform illumination on the plane of the pinhole array disk is not substantially bigger than a region of interest (ROI) corresponding to an area of the sample plane that is imaged by the imaging device. In the case where illumination light is delivered to the beam combining module by an optical fiber, the efficiency of the illumination may be improved, for example, by selecting the fiber such that the dimensions of the cross section of the core of the fiber and the numerical aperture $NA_F$ of the fiber satisfy a particular relationship with respect to the numerical aperture $NA_{MS}$ of the microscope and properties of the pinhole array disk.

An "illumination aperture", as used herein, refers to any illumination aperture that is suitable for use in confocal microscopy, as would be apparent to someone skilled in the art. For example, an "illumination aperture array" may refer to a plurality of pinholes, a plurality of slits, a Nipkow array, or any other suitable plurality of illumination apertures. It may also be part of a confocal scanner employing a rotating disk with the plurality of the illumination apertures, or two-dimensional array of pinholes translatorily movable in a plane of the array. Any suitable plurality of illumination apertures can be substituted for the pinhole array of pinholes employed in the examples described herein.

The terms "light" and "radiation" may be used interchangeably and refer to light in the UV-visible-NIR (ultraviolet-visible-near infrared) spectral range. The terms "light source" and "radiation source" may refer to any source able to generate and emit light or radiation, including but not limited to, lasers, light emitting diodes (LEDs), solid state devices, super luminescent diodes (SLDs), arc lamps, or any other suitable light sources as would be apparent to someone skilled in the art.

"Illumination light" or "excitation light", as used herein, refers to any light provided by a light source to be used for illumination of a sample. "Scattered light" or "returned light" refers to the light returning from the sample, and used for obtaining images of the sample. The returned light is often produced by fluorescence but can result from multi-photon excitation emission, reflection, Raman scattering or any other elastic or inelastic light scattering effect as would be known to someone skilled in the art.

The term "nearly collimated beam", as used herein, may refer to a light beam having a divergence that is greater than a diffraction-limited light beam, but low enough so as not to change the beam geometry on the scale of the optical system under consideration. Real beam divergence will be specified in every particular application.

The term "combining", as used herein, may refer to the joining or coupling of the illumination light path with the scattered light path in one direction, and the splitting or separating of the illumination light path from the scattered light path in another direction.

As used herein, a "microscope" comprises at least an objective lens, as illustrated, for example, by the objective lens 106 in Figures 1 and 2, and by the objective lens 310 in Figure 3. In other examples, microscopes may be considered to have the more conventional form of an infinity corrected micro-objective and a tube lens. Both cases are interchangeable. A "microscope system" is a system that may be used to probe a sample by projecting light or radiation onto the sample, thus producing reflected light or scattered light or fluorescence light or any combination thereof from the sample. As used herein, "multiplexed confocal microscopy" or "multipoint confocal microscopy" refers to the use of a plurality of illumination apertures to apply the confocal technique in parallel to a microscope.

## BRIEF DESCRIPTION OF THE DRAWINGS

Figure 1 illustrates a prior art episcopic imaging optical microscope system employing a half-silvered mirror beam splitter and/or dichroic beam splitter.

Figure 2 illustrates a prior art episcopic imaging optical microscope system employing a polarizing beam splitter and quarter wave plate.

Figure 3 illustrates a prior art episcopic imaging optical microscope system employing spatial combining of the illumination light path and the scattered light path.

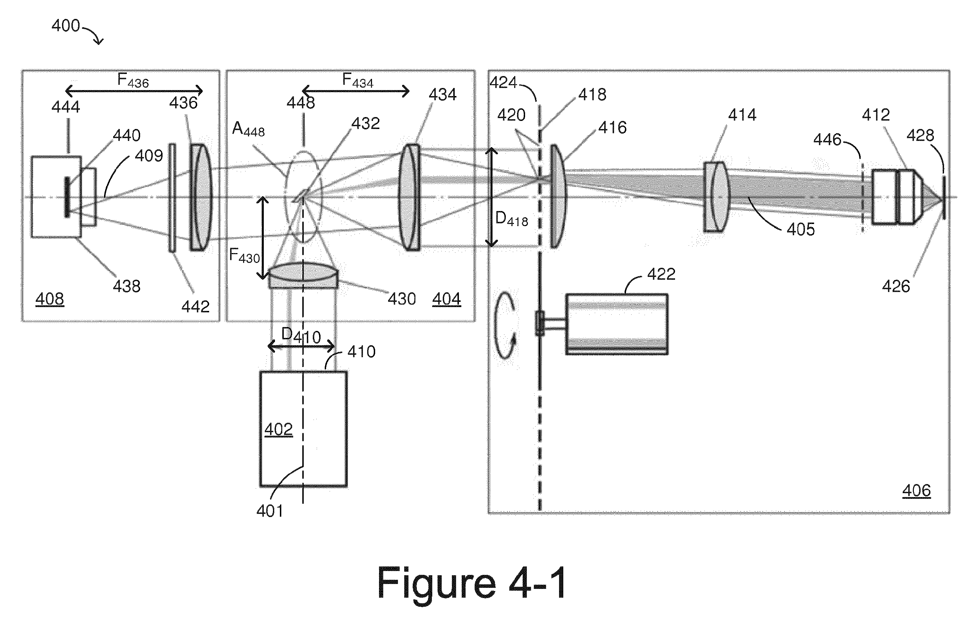

Figure 4-1 illustrates a first example multiplexed confocal microscope system employing a pick-off member for spatial combining of the illumination light path and the scattered light path.

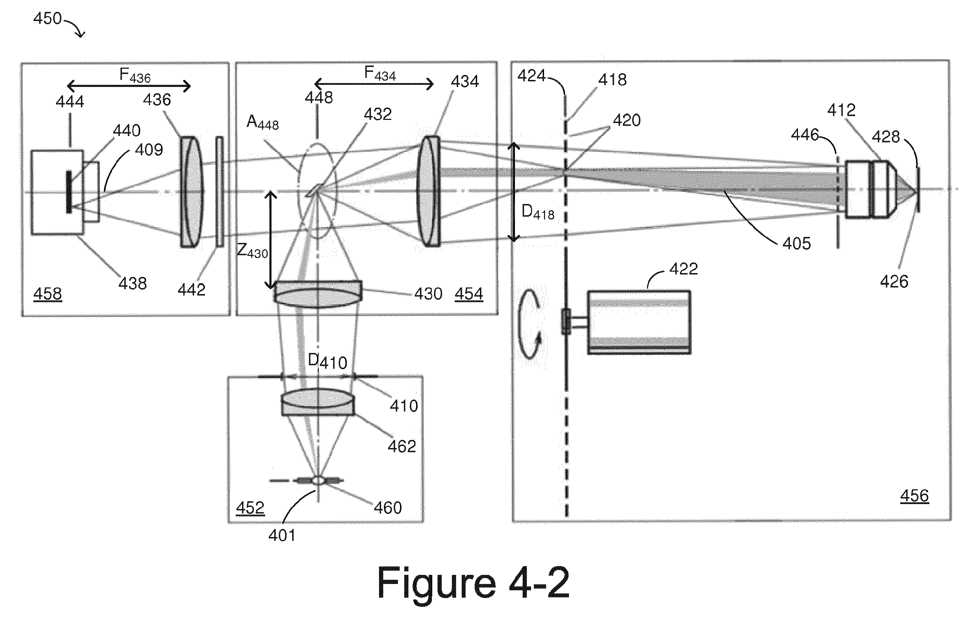

Figure 4-2 illustrates a second example multiplexed confocal microscope system employing a pick-off member for spatial combining of the illumination light path and the scattered light path.

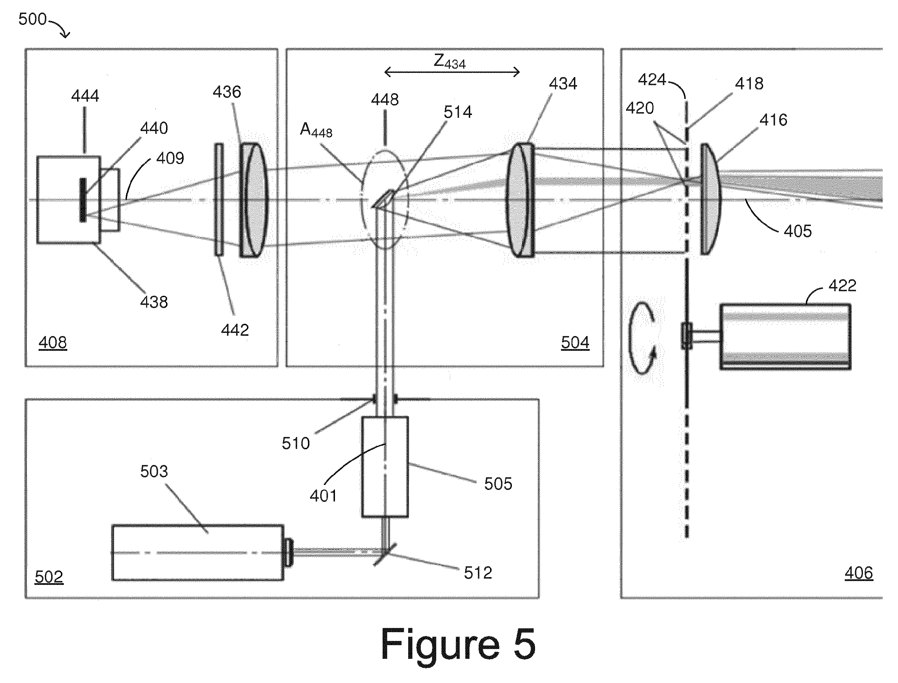

Figure 5 illustrates a third example multiplexed confocal microscope system employing a pick-off member for spatial combining of the illumination light path and the scattered light path.

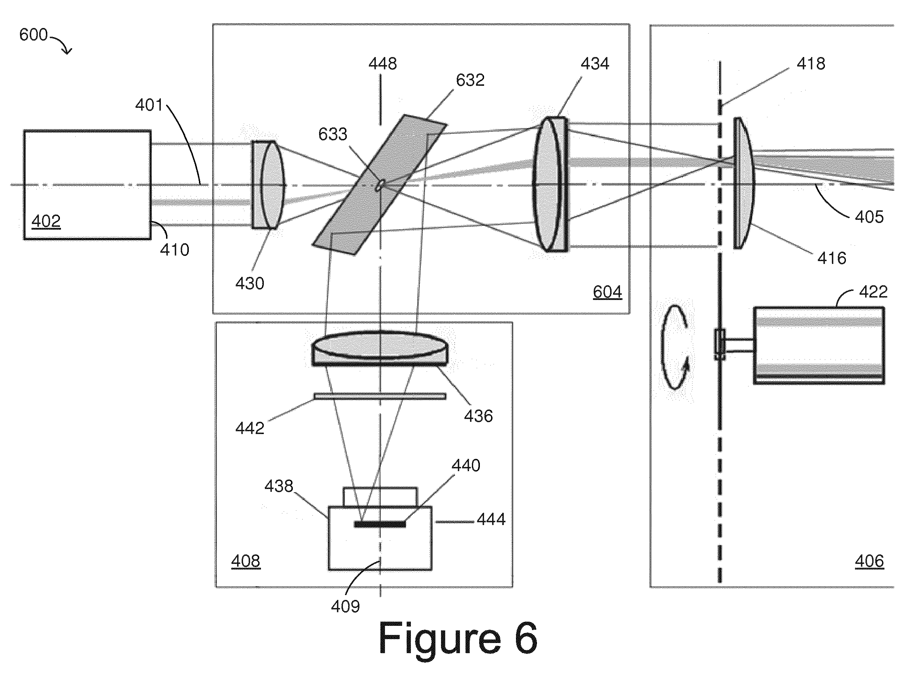

Figure 6 illustrates an example multiplexed confocal microscope system employing a perforated mirror for spatial combining of the illumination light path and the scattered light path.

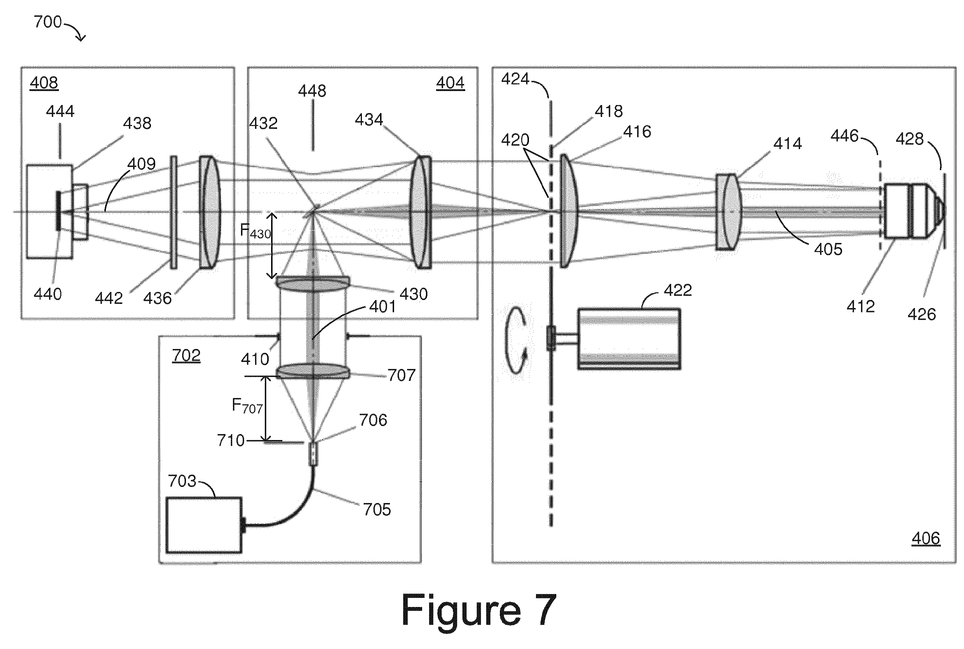

Figure 7 illustrates an example multiplexed confocal microscope system employing a pick-off member for spatial combining of the illumination light path and the scattered light path, comprising an optical fiber as a flexible light delivery subsystem and configured to provide Köhler illumination of a sample

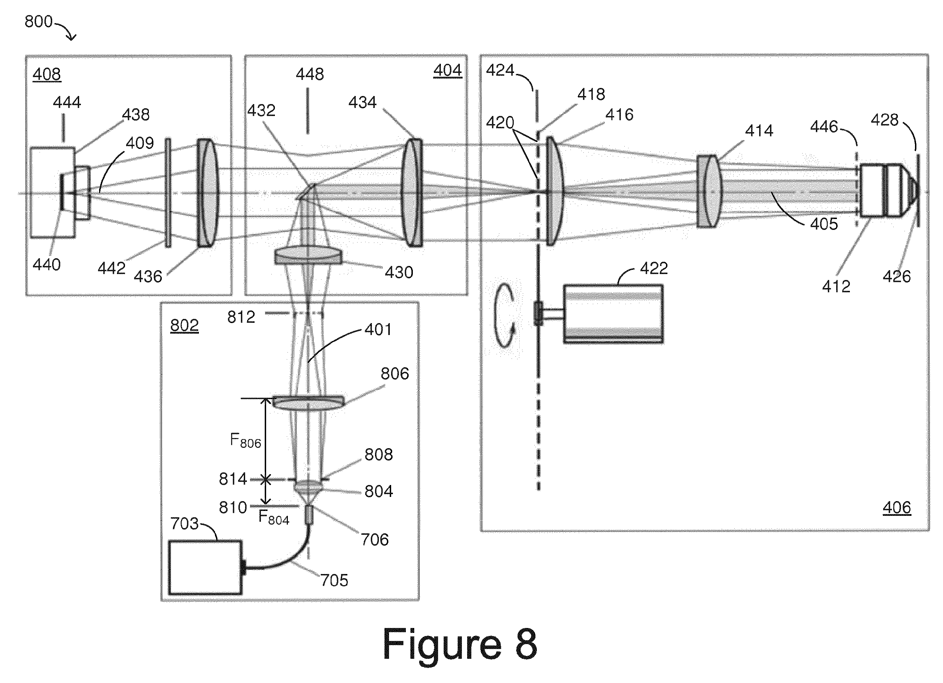

Figure 8 illustrates an example multiplexed confocal microscope system employing a pick-off member for spatial combining of the illumination light path and the scattered light path, comprising an optical fiber as a flexible light delivery subsystem and configured to provide critical illumination of a sample.

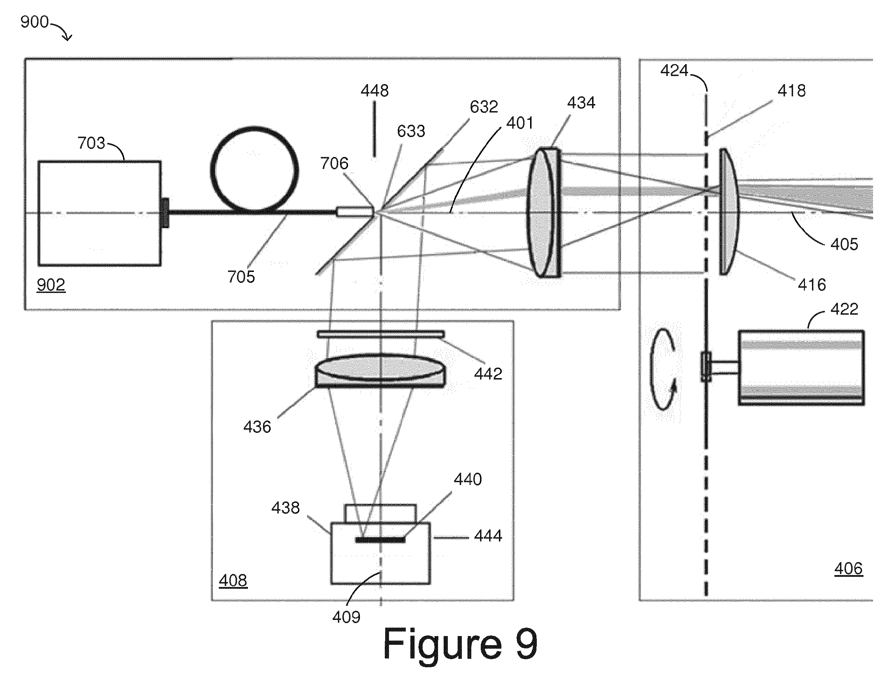

Figure 9 illustrates an example multiplexed confocal microscope system employing a perforated mirror for spatial combining of the illumination light path and the scattered light path, comprising an optical fiber as a flexible light delivery subsystem and configured to provide Köhler illumination of a sample.

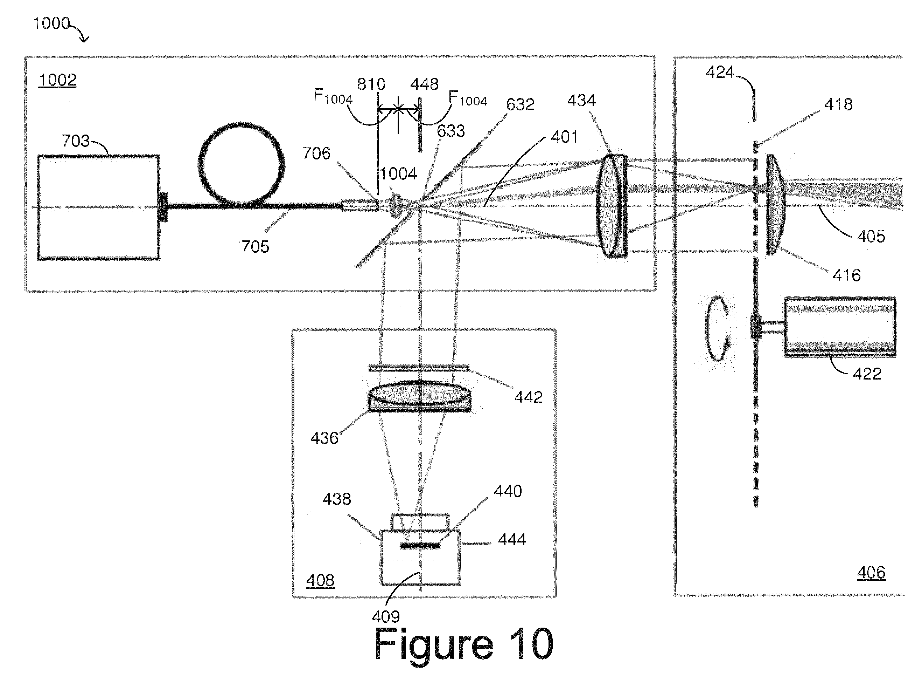

Figure 10 illustrates an example multiplexed confocal microscope system employing a perforated mirror for spatial combining of the illumination light path and the scattered light path, comprising an optical fiber as a flexible light delivery subsystem and configured to provide critical illumination of a sample.

It will be appreciated that for simplicity and clarity of illustration, elements illustrated in the figures have not necessarily been drawn to scale. For example, the dimensions of some of the elements may be exaggerated relative to other elements for clarity.

## DETAILED DESCRIPTION

Figure 4-1 illustrates a first example multiplexed confocal microscope system employing a pick-off member for spatial combining of the illumination light path and the scattered light path.

The system 400 of Figure 4-1 comprises a light source module 402, a beam combining module 404, a multiplexed confocal microscope module 406 and an imaging module 408.

The light source module 402 may be configured to generate and to optionally condition light to be emitted from an exit aperture 410. The light source module 402 may comprise one or more light sources, including, for example, lasers, light emitting diodes (LEDs), solid state devices, super luminescent diodes (SLDs), arc lamps, or any other suitable light sources as would be apparent to someone skilled in the art. In one example, the light sources may comprise one or more lasers, each laser generating light at a different wavelength. The light source module 402 may comprise additional optical elements, including, for example, one or more lenses, one or more mirrors, one or more optical fibers, and/or one or more light guides. The optical fibers may include single-mode and/or multi-mode fibers, and the light guides may include fiber bundles, and liquid-filled light guides.

One or more optical components may be used to form a collimated or nearly collimated beam of illumination light at the exit aperture 410 of the light source module 402, where the exit aperture 410 has a diameter $D_{410}$. The one or more optical components may include, for example, lenses, mirrors, prisms, and the like.

The light source module 402 may also comprise a beam-shaping means (not shown) for increasing evenness of the transverse intensity distribution of the illumination beam. The beam shaping means may be implemented, for example, by a diffractive beam shaper element, refracting optical components, mirror optics, or a filter means. The beam-shaping means may be selected so as to produce a collimated illumination beam having a transverse intensity distribution that is as uniform as possible. In one example, the beam profile may have a "top hat" shape with a flat transverse energy distribution. In another example, the collimated illumination beam may have a non-uniform profile, such as Gaussian profile, a cosine profile or any other profile as would be apparent to someone skilled in the art.

The multiplexed confocal microscope module 406 comprises an objective lens 412, as well as an optional tube lens 414 and an optional field lens 416. The multiplexed confocal microscope module 406 further comprises a pinhole array disk 418, which comprises a plurality of pinholes 420. The pinhole array disk 418 may be rotatable about its axis, for example, using a motor 422. Instead of the plurality of pinholes 420, the pinhole array disk 418 may comprise a plurality of slits, or any other suitable plurality of illumination apertures. The pinhole array disk 418 may be built in the form of a two-dimensional array of pinholes 420 translatorily movable in a plane of the pinhole array disk 418. For the sake of simplicity, the pinhole array disk 418 is herein assumed to have the form of a Nipkow disk, such that the pinholes 420 are disposed in a pattern of several interleaved spirals. The pinholes 420 may be spaced approximately two to ten pinhole diameters apart. The plane of the pinhole array disk 418 may coincide with a first image plane 424 of the multiplexed confocal microscope module 406.

The pinholes 420 of the pinhole array disk 418 diffract the impinging light. The light beam incident on the pinhole array disk 418 is split by the pinhole array disk 418 into an array of individual narrow diffracted beams that travel through the optional field lens 416 and the optional tube lens 414 and converge on the objective lens 412. One of the individual narrow diffracted beams is schematically illustrated in Figure 4-1 (not to scale) by a shadowed area starting from the light source module 402 and terminating on a sample 426, where the sample 426 is located at a sample plane 428. Each individual beam may be focused onto the sample plane 428, providing an array of diffraction limited focal spots. The pinhole array disk 418 may be rotated by the motor 422 at a constant speed. Since the pinholes 420 are arranged along a spiral path and since the first image plane 424 and the sample plane 428 are conjugate, the rotation of the pinhole array disk 418 may form a raster scan across the sample 426. Where a transverse distribution of light exiting the light source module 402 is substantially uniform, it may be possible to achieve a substantially uniform intensity of light transmitted through corresponding the pinholes 420 of the pinhole array disk 418. Accordingly, after a complete scan of the pinholes 420, it may be possible to achieve a substantially uniform illumination of the sample 426.

The beam combining module 404 comprises a focusing lens 430 with a focal length $F_{430}$, a pick-off member 432, and a collimating lens 434 with a focal length $F_{434}$. The pick-off member 432 acts as a spatial filter and may be placed a distance $F_{430}$ from the lens 430 along the optical axis 401 of the light source module 402, such that the focusing lens 430 focuses the collimated or nearly collimated beam onto the pick-off member 432. The illumination light is reflected by the pick-off member 432 towards the collimating lens 434, where the collimating lens 434 is placed a distance $F_{434}$ from the pick-off member 432 along the optical axis 405 of the multiplexed confocal microscope module 406. The lenses 430 and 434 form a telescopic device providing a collimated or nearly collimated beam for illumination of the first image plane 424 of the multiplexed confocal microscope module 406 and the conjugate sample plane 428. Using the paraxial ray approximation, a light ray originating from the center of the exit aperture 410 of the light source module 402 at an angle $\theta_{410}$ relative to the optical axis 401 will be incident, in normal operation, on the first image plane 424 at an angle $\theta_{434}$ relative to the optical axis 405, where the angle $\theta_{434}$ is expressed in equation 1 as:

$$\theta_{434} = \theta_{410} \cdot (F_{430}/F_{434}) \qquad\qquad (1)$$

A longest dimension $D_{418}$ of an area on the pinhole array disk 418 to be illuminated, which is roughly equal to a working aperture $D_{434}$ of the lens 434, is proportional to a diameter $D_{410}$ of the illumination beam exiting the exit aperture 410. This is expressed by equation 2:

$$D_{418}/D_{410} = F_{434}/F_{430} \qquad\qquad (2)$$

The lenses 430 and 434 are presented in the form of regular achromatic doublets. Alternatively, they may be built in the form of singlet spherical, aspheric, gradient index, triplet, or multi-component lenses, or any other focusing elements, including reflective focusing elements, Fresnel's optical elements, and diffractive focusing elements, as would be apparent to someone skilled in the art.

The pick-off member 432 is illustrated in Figure 4-1 in the form of a small flat reflecting mirror. However, the pick-off member 432 may be, for example, any mirrored surface that is able to reflect the illumination light towards the microscope, or a small right angle prism. Alternatively, rather than using reflection, the pick-off member 432 may use transmission, diffraction or refraction, as would be apparent to someone skilled in the art. Also, in some applications, it may be of interest to use a small polarizing beam splitter or a small dichroic mirror as the pick-off member 432. It should be noted that if a dichroic mirror is used as the pick-off member 432, little light will be obstructed by the pick-off member 432, but the flexibility to work at all wavelengths of interest may be compromised. In the example of Figure 4-1, the illumination light has an angle of incidence of 45 degrees relative to the surface of the pick off member 432, so that an angle between the axis 401 and the axis 405 is 90 degrees. It will be apparent to someone skilled in the art that this angle between the axes 401 and 405 may be varied in a wide range, for example, from 5 degrees to 150 degrees, where the angle may be dependent on a type of the pick-off member 432 being used and on the incidence angle.

The beam combining module 404 is configured to image the exit aperture 410 of the light source module 402 onto the sample plane 428 (or a plane conjugate to the sample plane 428, such as the first image plane 424). Such a configuration of the beam combining module 404 may result in substantially uniform illumination of the sample 426.

Typically, it is desired in a confocal microscope system for the pinhole spot to be imaged at or near the diffraction limit of the microscope. To produce the minimum imaged spot size, a divergence $\theta_{420}$ of the light transmitted through the pinhole 420 should be the same or larger than the largest numerical aperture $NA_{MS}$ of the microscope as measured at the first image plane 424 where the pinhole 420 is located. If the numerical aperture of light exiting the pinhole 420 is larger than numerical aperture $NA_{MS}$ of the microscope, then the minimum imaged spot size can be achieved, but some of the light will be rejected by the microscope optics. Ideally, the numerical aperture of light exiting the pinhole 420 should closely match the numerical aperture $NA_{MS}$ of the microscope so that the optimum resolution and light transmission to the sample 426 can be achieved.

An acceptance numerical aperture $NA_{MS}$ of the objective 412 of the microscope (a half of its back aperture angle) is expressed by equation 3 as:

$$NA_{MS} = \sin\theta_{MS} \approx D_{446}/2L = D_{446}/2F_{414} \qquad (3)$$

where $\theta_{MS}$ is the divergence angle from the microscope, $D_{446}$ is a diameter of the back aperture of the microscope, L is the distance between the tube lens 414 and the back focal plane 446 of the objective 412, and $F_{414}$ is the focal length of the tube lens 414.

The diameter $d_{420}$ of the pinholes 420 should be chosen so that the light exits the pinhole 420 at an angle $\theta_{420}$ given by the numerical aperture $NA_{MS}$ of the microscope as determined by optical diffraction theory. The divergence angle $\theta_{420}$ of the light exiting any individual pinhole 420 depends on the divergence angle $\theta_{434}$ of the illumination beam collimated with the lens 434 and on the diffraction at the pinhole 420, which is a function of the wavelength $\lambda$ of the illumination light and the pinhole diameter $d_{420}$. This is expressed by equation 4 as:

$$\theta_{420} = \text{sqrt}(\theta_{434}^2 + (0.61\lambda/d_{420})^2) \leq \theta_{MS} \approx NA_{MS} \qquad (4)$$

The pinhole array is typically designed in a multi-focal confocal microscope such that the light exiting the pinhole is at or near the designed acceptance numerical aperture $NA_{MS}$ of the microscope. Using equation 4, the divergence angle $\theta_{434}$ of the light illuminating the pinhole array disk 418 may be expressed as follows:

$$\theta_{434} = \leq \text{sqrt}(NA_{MS}^2 - \gamma^2) \qquad (5)$$

where $\gamma = 0.61\lambda/d_{420}$ is an angle of the diffraction.

Equations 1, 2 and 5 may be used with the paraxial approximation to derive a relationship between (i) the product of a desired dimension $D_{418}$ of the area on the pinhole array disk 418 to be illuminated and the microscope acceptance numerical aperture $NA_{MS}$ and (ii) the product of the illumination beam diameter $D_{410}$ of the light source module 402 and the exit divergence angle $\theta_{410}$. This relationship is expressed in equation 6 as:

$$D_{410}\theta_{410} = D_{434}\theta_{434} \leq D_{418} \cdot \text{sqrt}(NA_{MS}^2 - \gamma^2) < D_{418}NA_{MS} \qquad (6)$$

It is of interest to have a light beam of relatively low etendue. For example, the etendue of the light beam may be lower than the etendue of the microscope. That is, the product of the light beam diameter $D_{410}$ and the exit divergence angle $\theta_{410}$ may satisfy the requirements given by equation 6.

For a pinhole diameter $d_{420} = 30\ \mu\text{m}$, a wavelength $\lambda = 488$ nm, a dimension $D_{418} = 10$ mm, and a microscope acceptance numerical aperture $NA_{MS} = 0.015$, the diffraction angle is $\gamma = 0.61\lambda/d_{420} = 0.01$, and the optimal product of the divergence $\theta_{410}$ of the illuminating beam and its diameter $D_{410}$ is expressed as:

$$D_{410}\theta_{410} \leq 0.12\text{mm} < 0.15\text{mm} \qquad (7)$$

The light focused on the multiple points of the sample 426 may be scattered from the sample 426 and captured by the objective lens 412 at the operating numerical aperture $NA_{MS}$ of the objective lens 412. The captured light may be focused at the same pinholes 420 at the first image plane 424 after traveling through the optional tube lens 414 and the optional field lens 416.

The imaging module 408 may be configured to provide an analog or digital image of the first image plane 424 and, consequently, a magnified region of interest (ROI) of the sample 426 under investigation conjugated to the first image plane 424. The imaging module 408 comprises an imaging lens 436 with a focal length $F_{436}$ and an imaging device 438, such as a high-sensitivity camera, with an image sensor 440. Optics of the imaging module 408 may comprise additional elements such as a blocking filter 442, essential for fluorescence imaging, and/or narrow band filters for multi-spectral imaging, a relay lens (not shown), a diaphragm (not shown) and other additional elements, as would be apparent to someone skilled in the art.

The imaging lens 436 is placed on the optical axis 409 of the imaging module 408 (which coincides with the optical axis 405 of the multiplexed confocal microscope module 406) at a distance $F_{436}$ from the image sensor 440. The imaging lens 436 is schematically illustrated in Figure 4-1 in the form of a regular achromatic doublet. Alternatively, the imaging lens 436 may be built in the form of a multi-component lens, aspheric singlet, gradient index, triplet lenses, or any other focusing elements, including reflective focusing elements, Fresnel's optical elements, and diffractive focusing elements, as would be apparent to someone skilled in the art.

A non-exhaustive list of examples of the imaging device 438 includes a charge-coupled device (CCD) camera, a complementary metal-oxide semiconductor (CMOS) camera, an intensified CCD (ICCD) camera, and any other suitable camera as would be apparent to someone skilled in the art. A 3CCD camera with additional narrowband filters may be applied for simultaneous multi-spectral imaging.

In order provide an image of the sample 426, the imaging device 438, the sample 426 and the relay optics (comprising, for example, the lenses 434 and 436) may be arranged such that the sample plane 428 and a plane of the image sensor 440 are optically conjugate with each other.

The light passing through the pinholes 420 is focused by the lens 434 and the imaging lens 436 onto the image sensor 440, providing an array of diffraction limited focal spots. Rotation of the pinhole array disk 418 forms a raster image, thus providing a magnified confocal image of the sample 426. The sample plane 428, a first image plane 424 (coinciding with the surface of the pinhole array disk 418), and a second image plane 444 (coinciding with the image sensor 440) are conjugate to one another.

The light path of the individual narrow diffraction beam being reflected by the sample 426, collected by the objective lens 412, and further focused onto the first image plane 424, and the second image plane 444 is schematically illustrated in Figure 4-1 by means of marginal rays (not in scale).

The beam combining module 404 may be configured to provide a magnification such that the area of substantially uniform illumination on the sample 426 is not substantially bigger than the ROI of the sample 426 that is imaged by the image sensor 440 of the imaging device 438. This may improve the efficiency of the illumination.

Within the relay lens optics (comprising, for example, the lenses 434 and 436), an image of the back focal plane 446 of the objective lens 412 may be formed. The plane at which the image of the back focal plane 446 is formed may be defined as the conjugate back focal aperture plane 448. The image of the back focal plane 446 in the conjugate aperture plane 448, also called the back aperture image, has an area $A_{448}$. The field lens 416, which may be located at or near the first image plane 424, may be used to collimate the scattered light entering the relay lens 434. This means that the image of the back focal plane 446 may be located at the focal length $F_{434}$ of the lens 434. It is substantially at the conjugate aperture plane 448 that the pick-off member 432 is located. The pick-off member 432 may have an area $A_{432}$ that is substantially smaller than the area $A_{448}$ of the back aperture image. For example, the diameter $D_{432}$ of the pick-off member 432 may be substantially less than the diameter $D_{448}$ of the back aperture image, that is $D_{432} << D_{448}$.

While an aperture of the pick-off member 432 may be as small as possible, it should be large enough to reflect all the focused illumination light toward the multiplexed confocal microscope module 406. A minimal diameter $D_{432}$ of the aperture of the pick-off member 432 may be found using the paraxial ray approximation, and is expressed in equation 8 as:

$$D_{432} \geq 2\theta_{410}F_{430} \qquad (8)$$

In one example, the area $A_{432}$ of the aperture of the pick-off member 432 is approximately 5% of the area $A_{448}$ of the back aperture image. Most of the light used to create the back aperture image may continue on to the second image plane 444, where it may be captured, for example, by the image sensor 440 of the imaging device 438. However, a portion of the light will be blocked, partially blocked, reflected or otherwise obstructed by the pick-off member 432. The portion of scattered light that is obstructed corresponds to the area $A_{432}$, whereas the portion of the scattered light that is not obstructed corresponds to an area $A'_{432}$, where the area $A_{448}$ is the union of the area $A_{432}$ and the area $A'_{432}$, and where the area $A_{432}$ does not intersect with the area $A'_{432}$. That is, $A_{448} = A_{432} \cup A'_{432}$ and where $A_{432} \cap A'_{432} = 0$.

An efficiency E of the beam combining module 404 is related to the ratio of the area $A_{432}$ to the area $A_{448}$ as expressed in equation 9:

$$E = 1 - (A_{432})/(A_{448}) \qquad (9)$$

For example, one may consider the case that the back aperture image has a diameter $D_{448}$ = 2.5 mm, and the pick-off member 432 is in the form of a right angle prism having aperture dimensions 0.5mm x 0.5mm. In this case, the area $A_{432}$ obscured by the pick-off member 432 is approximately 5% of the area $A_{448}$ of the back aperture image, that is $A_{432}$ = 0.05·$A_{448}$. Thus, approximately 5% of the scattered light may be blocked by the pick-off member 432. Since the remaining portion $A'_{432}$ of the area $A_{448}$ is approximately 95% of the area $A_{448}$ of the back aperture image, that is $A'_{432}$ = 0.95 $A_{448}$, it follows that approximately 95% of the scattered light may be transmitted to the imaging device 438. This may provide a highly efficient and flexible means of combining the scattered and illumination light paths. While it is contemplated that all of the area $A_{432}$ corresponding to the pick-off member 432 may be located within the area $A_{448}$ of the back aperture image, it is alternatively possible that some portion of the area $A_{432}$ may be outside of the area $A_{448}$ of the back aperture image. Only that portion of the area $A_{432}$ that is within the area $A_{448}$ of the back aperture image may block or obstruct the scattered light from reaching the second image plane 444.

Collimated light beams are traditionally used in complex optical systems, where it is possible the collimated beams are less aberrated than non-collimated beams by optical components that they travel through. However, the illumination light beam provided by the light source module may be neither collimated nor nearly collimated, and may have a considerable divergence or convergence. An example of this is illustrated in Figure 4-2.

The multiplexed confocal microscope system 450 of Figure 4-2 comprises a light source module 452, a beam combining module 454, a multiplexed confocal microscope module 456 and an imaging module 458.

The beam combining module 454 is similar to the beam combining module 404 illustrated in Figure 4-1. The multiplexed confocal microscope module 456 is similar to the multiplexed confocal microscope module 406, except that it does not include the optional lenses 414 and 416. The imaging module 458 is similar to the imaging module 408, except that the blocking filter 442 is positioned on the opposite side of the imaging lens 436.

The light source module 452 is similar to the light source module 402, in that it may be configured to generate and optionally to condition light to be emitted from an exit aperture 410. In this case, the light source module 452 comprises a point-like light source illustrated in the form of an arc lamp 460 and a collective lens 462.

The illumination beam exiting the exit aperture 410 of the light source module 452 may have a rather high numerical aperture absolute value $|NA_{410}|$ = sin $\alpha$ , where $\alpha$ is an angle between a marginal ray of the light beam and the optical axis 401.

In the event that the light beam has a relatively high numerical aperture absolute value $|NA_{410}|$, such that sin $\alpha \approx 1/20$, for example, in order for the lens 430 to focus the light beam onto the aperture of the pick-off member 432, the lens 430 should be placed a distance $Z_{430}$ from the pick-off member 432, where the distance $Z_{430}$ is expressed in equation 10 as:

$$Z_{430} = F_{430}/(1-2\alpha F_{430}/D_{410}) \qquad (10)$$

The relationship in equation 10 uses the thin lens approximation and paraxial approximations.

To correctly image the pick-off mirror to the back aperture of the objective, it is common practice to use an optional field lens (not shown) located close to the disk plane 424. To avoid the use of a field lens, the light beam illuminating the pinhole array disk 418 may be somewhat convergent or divergent to match the microsope optics without a field lens, as it is illustrated in Figure 4-2.

It should be noted that the total area of the pinholes 420 illuminated at any one time is about five percent of $A_{418}$ (the illuminated part of the pinhole array disk 418) or less. Thus, only a few percent of the illuminating light reaching the plane of the pinhole array disk 418 actually passes through the pinholes 420. A major part of the light is reflected from the disk 418 itself toward the imaging module 408. For this reason, it may be beneficial to eliminate the reflected light, particularly when observing weakly-scattering samples. One technique for doing this is described in the U.S. Patent No. 4,927,254, in which the rotating disk is tilted to eliminate reflections from the disk. The disk may be tilted sufficiently far so that the light reflected from the disk is deviated far enough from the optical axis that it exits the imaging system and is directed towards a light stop in front of the imaging lens 436 or a light stop located at the aperture plane 448 and is eliminated. In the examples of Figures 4-1 and 4-2, the collimated beam of the remaining reflected light from the pinhole array disk 418 is focused by the collimating lens 434 back onto the pick-off member 432, which is located at the focal point of the lens 434, thus removing remaining reflected light from the imaging light beam travelling to the imaging module 408. For luminescence imaging, it may be of interest to place an optional narrow band filter 442 in the emission path between the detection device and the pick-off member 432, to further reduce scattered excitation light, as reflected from the pinhole array disk 418 and from the optical components of the confocal microscope system. Another technique is to place an adjustable iris at the conjugate plane 448, where the adjustable iris is centered around the pick-off member 432 (or more generally, around the spatial filter). This technique may be used in combination with the optional narrow band filter 442 or in combination with the tilting of the rotating disk or in combination with both.

Figure 5 illustrates a third example multiplexed confocal microscope system employing a pick-off member for spatial combining of the illumination light path and the scattered light path.

Similarly to the example of Figure 4-1, the multiplexed confocal microscope system 500 of Figure 5 comprises the multiplexed confocal microscope module 406 and the imaging module 408. However, in place of the light source module 402 and the beam combining module 404, the system of Figure 5 comprises a light source module 502 and a beam combining module 504, respectively.

The light source module 502 comprises a light source 503, a beam conditioning unit 505, an exit aperture 510, and an optional folding mirror 512.

The light source 503 may be built, for example, in the form of multi-wavelength light source assembly described in U.S. Patent No. 8,275,226, to generate multi-wavelength light that is suitable for illumination in confocal microscopy. Depending on the application, the light source module 502 may comprise one or more lasers, each laser generating light at a different wavelength, for example.

The beam conditioning unit 505 may comprise, for example, two sub-units (not shown) - a beam-shaping means for increasing an evenness of intensity distribution of the illumination light beam, and a beam expander to provide the illumination beam with a desired diameter. The beam shaping means may be implemented by a diffractive beam shaper element, refracting optical components, mirror optics, or a filter means. The beam expander may be built in the form of telescopic setup of any kind, as would be apparent to someone skilled in the art, and may include one or more lenses, one or more mirrors, and one or more prisms.

The light source module 502 may be configured to provide a collimated beam of illumination having a desired diameter and substantially high evenness of the transverse intensity distribution of the illumination.

The beam combining module 504 comprises a collimating lens 434 and a pick-off member in the form of a convex mirror 514. The convex mirror 514 may be spherical mirror or an off-axis parabolic mirror, and it has a focal length $-F_{514}$ and a diameter $D_{514}$ that is substantially less than the diameter $D_{448}$ of the back aperture image, that is $D_{514} << D_{448}$. The convex mirror 514 defocuses the collimated beam and reflects it towards the collimating lens 434, which is placed a distance $Z_{434} = F_{434} - F_{514}$ from the convex mirror 514. The convex mirror 514 and the lens 434 form a telescopic device providing a collimated or nearly collimated beam for illumination of the first image plane 424.

In another example, the mirror 514 for the narrow collimated illumination beam provided by the light source module 502 may be built in the form of a concave spherical mirror or an off-axis parabolic mirror having a focal length $F_{514}$. In this case, the collimating lens 434 would be placed at a distance $Z'_{434} = F_{434} + F_{514}$ from the pick-off member 514 in order to form a telescopic setup. Similarly to the pick-off member 432, the mirror 514 acts as a spatial filter.

Figure 6 illustrates an example multiplexed confocal microscope system employing a perforated mirror for spatial combining of the illumination light path and the scattered light path. In this example, the illumination light path and the imaging light path are mutually interchanged.

Similarly to the example of Figure 4-1, the multiplexed confocal microscope system 600 of Figure 6 comprises the light source module 402, the multiplexed confocal microscope module 406, and the imaging module 408. The system includes a beam combining module 604, which comprises the focusing and collimating lenses 430 and 434. The beam combining module 604 also comprises a highly reflecting folding perforated mirror 632 with a small coupling window 633 for transmitting illumination light. The window 633 may also be described as a hole or an opening. The perforated mirror 632, which acts as a spatial filter, is placed so that the window 633 is fixed in the plane 448 conjugate to the back focal plane of the objective lens of the multiplexed confocal microscope module 406. The window 633 in the folding perforated mirror 632 functions as a beam combining (pick-off) member. The illumination light beam exiting the light source module 402 is focused by the focusing lens 430 into the window 633 and is transmitted to the multiplexed confocal microscope module 406. The scattered imaging light from the multiplexed confocal microscope module 406 is reflected by the folding perforated mirror 632 toward the imaging module 408.

Figure 7 illustrates an example multiplexed confocal microscope system employing a pick-off member for spatial combining of the illumination light path and the scattered light path, comprising an optical fiber as a flexible light delivery subsystem and configured to provide Köhler illumination of a sample.

Similarly to the example of Figure 4-1, the multiplexed confocal microscope system 700 of Figure 7 comprises the beam combining module 404, the multiplexed confocal microscope module 406, and the imaging module 408. The system includes a light source module 702 configured to provide a collimated (or nearly collimated) beam of illumination light. The light source module 702 comprises a light source 703, which may be built, for example, in the form of multi-wavelength light source assembly described in U.S. Patent No. 8,275,226, to generate and optionally to condition multi-wavelength light that is suitable for illumination in confocal microscopy. Depending on the application, the light source 703 may comprise one or more lasers, each laser generating light at a different wavelength, for example.

The light source module 702 may also comprise a beam-shaping means (not shown) for increasing an evenness of an angular distribution of the illumination light beam. The beam shaping means may be implemented, for example by a diffractive beam shaper element, refracting optical components, mirror optics, or a filter means.

The light source module 702 may comprise a fiber optic light delivery subsystem 705. The fiber optic light delivery subsystem 705 is presented in the form of an optical fiber. The optical fiber 705 may be a single-mode or multi-mode optical fiber with a core diameter $D_F$ and numerical aperture $NA_F$, a fiber bundle, or a light guide.

A multimode fiber may have a core of circular cross section, square cross section, rectangular cross section, or any other suitable cross section. A step-index multimode fiber is an example of a multimode fiber for which the transverse distribution of light exiting the distal end is substantially uniform. It is contemplated that other multimode fibers also exhibit the behavior that the angular distribution or the transverse distribution of light exiting the distal end is substantially uniform. In the expression "angular distribution of light exiting the distal end of the multimode fiber" means distribution of a radiated power as a function of an inclination angle relative to the optical axis of the fiber; "transverse distribution of light exiting the distal end of the multimode fiber", the term "transverse" means transverse to an optical axis of the multimode fiber.

It may be of interest to have an angular distribution of the light beam exiting a distal end 706 of the optical fiber 705 be as uniform as possible, thus making it possible to achieve a substantially uniform intensity of light transmitted through corresponding pinholes 420 of a pinhole array disk 418, which, after a complete scan of the pinholes 420, may result in substantially uniform illumination of the sample 426.

Collimating optics 707 having a focal length $F_{707}$ may be placed a distance $F_{707}$ from the fiber tip 706. The collimating optics 707 is illustrated in the form of an achromatic doublet lens. Alternatively, the collimating optics 707 may be built in the form of singlet spherical, aspheric, gradient index, triplet, or multi-component lens, or any other focusing elements, including reflective focusing elements and diffractive focusing elements, as would be apparent to someone skilled in the art. The fiber optic light delivery subsystem 705 may comprise additional elements not illustrated in Figure 7. For example, the fiber optic light delivery subsystem 705 may comprise means for phase randomization or additional optical fibers or both.

It should be noted that the plane 710 of the fiber tip 706, the plane 448 in which the pick-off member 432 is fixed, and the back focal plane 446 of the microscope objective lens 412 are conjugate. That means that lenses 707 and 430 form a relay optical device providing an image of the fiber tip 706 onto the pick-off member 432, and further onto the back focal plane 446 of the objective lens 412. This optical setup provides relatively uniform illumination of the sample, which is known as "Köhler illumination."

The light exits the fiber 705 with a spread of angles given by the numerical aperture $NA_F$ of the fiber 705. In general, a numerical aperture $NA_F$ of a fiber is expressed in equation 11 as:

$$NA_F = n \cdot \sin\theta_F \qquad (11)$$

where n is a refractive index of the surrounding medium to which the light exits from the distal end of the fiber, exit angle $\theta_F$ is the angle of divergence of light with respect to an optical axis of the fiber. In the case that the surrounding medium is air, the refractive index n = 1.

A beam of the illumination light exiting the aperture 410 of the light source module 702 is characterized by its diameter $D_{410}$ and divergence angle $\theta_{410}$ near the beam axis 401, where both depend on the core diameter $D_F$ of the fiber 705, its numerical aperture $NA_F$, and the focal length $F_{707}$ of the collimating lens 707. They may be found using the paraxial ray approximation, and are expressed in equations 12 as:

$$\theta_{410} = D_F/(2F_{707}); \quad D_{410} = 2\theta_{706} F_{707} \qquad (12)$$

where $\theta_{706}$ is the divergence angle at the fiber tip 706.

Equations 6 and 12 may be used with the paraxial approximation to derive the following desired product of the core diameter $D_F$ of the fiber 705 and the exit angle $\theta_{706}$:

$$D_F\theta_{706} = D_{410}\theta_{410} \leq D_{418}\,\mathrm{sqrt}(NA_{MS}^{2} - \gamma^{2}) < D_{418}NA_{MS} \qquad (13)$$

For a pinhole diameter $d_{420}$ = 30 $\mu$m, a wavelength $\lambda$ = 488 nm, a dimension $D_{418}$ = 10 mm, and a microscope acceptance numerical aperture $NA_{MS}$ = 0.015, the diffraction angle is $\gamma = 0.61\lambda/d_{420}$ = 0.01, and the optimal product of the divergence $\theta_{410}$ of the illuminating beam and its diameter $D_{410}$ is given by equation 7. If the numerical aperture $NA_F$ of the fiber 705 is $NA_F$ = 0.22, the optimal fiber core diameter $D_F$ is expressed as $D_F \leq 0.55$mm.

An efficiency E of the beam combining module 404 is defined by the numerical aperture $NA_{MS}$ and the dimension $D_{418}$ of the ROI image of the multiplexed confocal microscope module 406, and by the numerical aperture $NA_F$ and the core diameter $D_F$ of the fiber 705. The efficiency E may be found using the paraxial approximation and Lagrange invariant, and is expressed in equation 14 as:

$$E \leq 1 = ((D_F NA_F)/(D_{418} NA_{MS}))^2 \qquad (14)$$

By placing the distal end 706 of the fiber 705 a distance $F_{707}$ from the lens 707, light passing through the lens 707 may be collimated. A diameter of the lens 707 should be large enough to capture the light emitted from the distal end 706 of the fiber 705.

In order to provide an image of the distal end 706 of the fiber 705 onto the aperture of the pick-off member 432, the lens 430 of the beam combining module 404 may be placed a distance $F_{430}$ from the pick-off member 432.

A magnification M of the image provided by the relay optics formed by the lenses 707 and 430 is defined by the respective focal lengths $F_{707}$ and $F_{430}$ of the lenses, and is expressed in equation 15 as:

$$M = F_{430}/F_{707} \qquad (15)$$

The numerical aperture $\sin\theta_{432}$ of the illumination beam reflected by the pick-off member 432 is expressed in equation 16 as:

$$\sin\theta_{432} = NA_F/M = \sin\theta_F(F_{707}/F_{430}) \qquad (16)$$

where $\theta_{432}$ is the divergence of the illumination beam reflected by the pick-off member 432. The aperture diameter $D_{432}$ of the pick-off member 432 depends on the core diameter $D_F$ of the fiber 705 and on the magnification 5. In order to achieve an effective coupling of the illumination light path with the microscope imaging light path and to avoid undesired loss of the illumination light, the aperture diameter $D_{432}$ may be selected to satisfy equation 17:

$$D_{432} \geq M \cdot D_F = D_F(F_{430}/F_{707}) \qquad (17)$$

Since the core diameter $D_F$ and the numerical aperture $NA_F = \sin\theta_{706}$ of the fiber 705 have been selected to approximately follow the relation of equation 11, the etendue of light emitted from the distal end 706 of the fiber 705 does not substantially exceed the etendue of light passing through the pinholes 420 of the pinhole array disk 418, thereby achieving efficient illumination of the sample 426.

In normal operation, illumination light from the light source module 702 will arrive at the center of a central pinhole 420 at an angle $\theta_{434}$ relative to the optical axis 405. The angle $\theta_{434}$ is the divergence of the illumination beam collimated by the collimating lens 434, and is expressed in equation 18 as:

$$\theta_{434} = (D_F F_{430})/(F_{707} F_{434}) \qquad (18)$$

The radiant intensity of the light at the plane of the pinhole array disk 418 may be substantially uniform as long as the distal end 706 is imaged sufficiently close to the plane of the pinhole array disk 418, even if the distal end 706 is not imaged precisely onto the plane of the pinhole array disk 418. Substantially uniform illumination of the sample after a complete scan of the illumination apertures may therefore be achievable where (i) the transverse distribution of light exiting the distal end 706 of the fiber 705 is substantially uniform and (ii) light-coupling optics of the light source module 702 and the beam combining module 404 are configured to image the distal end 706 of the fiber 705 onto or sufficiently close to the plane of the pinhole array disk 418.

Persons of ordinary skill in the art will appreciate that substantially uniform illumination of a sample may also be achievable when, instead of or in addition to imaging the exit aperture of the fiber tip 706 onto or sufficiently close to the sample plane 426, the light source module 702 and the beam combining module 404 image the exit aperture of the light source module 702 onto or sufficiently close to a plane that is optically conjugate to the sample plane 426.

Figure 8 illustrates an example multiplexed confocal microscope system employing a pick-off member for spatial combining of the illumination light path and the scattered light path, comprising an optical fiber as a flexible light delivery subsystem and configured to provide critical illumination of a sample.

Similarly to the example of Figure 4-1, the multiplexed confocal microscope system 800 of Figure 8 comprises the beam combining module 404, the multiplexed confocal microscope module 406, and the imaging module 408. The system includes a light source module 802 configured to provide a nearly collimated beam of illumination light. The light source module 802 comprises the light source 703, and the fiber optic light delivery subsystem 705 with a fiber distal end tip 706. The light source module 802 further comprises magnifying relay optics in the form of a first lens 804 having a short focal length $F_{804}$ and a second lens 806 having a long focal length $F_{806}$, where the focal length $F_{806}$ is substantially greater than the focal length $F_{804}$, that is $F_{806} >> F_{804}$. The first lens 804 may be placed a distance $F_{804}$ from the plane 810 of the fiber tip 706. A relay optics aperture 808 may be placed close to the first lens 804.

The light source module 802 may also comprise a beam-shaping means (not shown) for increasing an evenness of an angular distribution of the illumination light beam. The beam shaping means may be implemented, for example, by a diffractive beam shaper element, refracting optical components, mirror optics, or a filter means.

The relay optics is illustrated in the form of pair of achromatic doublet lenses 804 and 806. Alternatively, it may be built in the form of single doublet, triplet, aspheric, or gradient index lens having low aberrations, in the form of a multi-component relay lens, or in the form of a finite microscope objective. The relay optics 804 and 806 is configured to image the distal end 706 of the fiber 705 laying in the plane 810 onto an intermediate image plane 812 that is optically conjugated to the first image plane 424 coinciding with the surface of the scanning pinhole disk 418, and to the plane 428 of the sample 426, both conjugated to the second image plane 444 coinciding with the image sensor 440. This optical setup provides highly uniform illumination of the sample 426, which is known as "critical illumination".

The lens 806 may be placed at a distance equal to or approximately equal to its focal length $F_{806}$ from the lens 804 and/or from the aperture 808. In this case the lens 806 together with the focusing lens 430 of the beam combining module 404 forms a relay optical device providing an image of the lens 804 and/or the aperture 808 onto the pick-off member 432, and further onto the back focal plane 446 of the objective lens 412. It says that plane 814 of the lens 804 and/or aperture 808, the plane 448 in which the pick-off member 432 is fixed, and the back focal plane 446 of the microscope objective lens 412 are conjugate. Such arrangement of the fiber tip 706, the lens 804, the lens 806, the lens 430, and the pick-off member 432 provides a light spot with a minimal diameter in the plane 448 and, consequently, a minimal required aperture of the pick-off member 432. The pick-off member 432 should be large enough to direct toward the multiplexed confocal microscope module 406 all the illumination light coming through the aperture 808.

Alternatively, the light source module 802 and the beam combining module 404 may be configured to image the distal end 706 of the fiber 705 sufficiently close to the plane 428 of the sample 426 or sufficiently close to the first image plane 424 such that a radiant intensity of light at the sample plane 428 or the first image plane 424 is substantially uniform. In one example, the fiber tip 706 may be fixed at a small distance from the plane 810 conjugate to the first image plane 424, the sample plane 428, and the second image plane 444. Such a configuration of the light source module 802 and the beam combining module 404 may result in a substantially uniform illumination of the sample 426.

The beam combining module 404 may be configured to provide a magnification such that the area of substantially uniform illumination on the sample plane 428 is not substantially bigger than an imaged area of the sample plane 428 that is imaged by the image sensor 440 of the imaging device 438. This may improve the efficiency of the illumination.

The excitation light is emitted from the distal end 706 of the fiber 705 and is turned into diverging rays with a maximum spread-angle dependent on the numerical aperture $NA_F$ of the fiber 705. The light then passes through the lens 804, the aperture 808, and the lens 806. The lenses 804 and 806 and the fiber 705 may be configured to image the tip 706 of the fiber 705 onto, or sufficiently close to, the plane 812 conjugated to the first image plane 424 coinciding with the surface of the pinhole array disk 418. The lenses 430 and 434 may be configured to reimage the tip 706 of the fiber 705 from the plane 812 onto the first image plane 424 so that the radiant intensity of light at the first image plane 424 is substantially uniform because the transverse distribution of light exiting the fiber 705 is substantially uniform. Specifically, since the lenses 804, 806, 430 and 434 have been selected to provide a magnification equal to or greater than the minimum magnification $M_{min}$ according to equation 16, the size of the image of the tip 706 of the fiber 705 at the first image plane 424 is sufficient to illuminate with substantial uniformity all the pinholes 420 that are used by the imaging module 408 to construct the confocal image of the sample 426. The minimum magnification $M_{min}$ is expressed by equation 19 as:

$$M_{min} = M_{802} \cdot M_{404} = (F_{806}/F_{804}) \cdot (F_{434}/F_{430}) \geq D_{418}/D_F \qquad (19)$$

A beam of the illumination light exiting the aperture 810 of the light source module 802 is characterized by its diameter $D_{810}$ and divergence angle $\theta_{810}$ near the beam axis 401. These values in turn depend on the core diameter $D_F$ of the fiber 705, its numerical aperture $NA_F$, and the focal length $F_{804}$ of the collimating lens 804. They may be found using the paraxial ray approximation and are expressed in equation 20 as:

$$\theta_{810} = \theta_{706}/M_{802} = \theta_{706}F_{804}/F_{806}; \; D_{810} \approx D_F M_{802} = D_F F_{806}/F_{804} \qquad (20)$$

Equations 6 and 12 may be used with the paraxial approximation to derive the following desired product of the core diameter $D_F$ of the fiber 705 and the exit angle $\theta_{706}$, again resulting in the expression given in equation 13.

The light exiting the pinhole array disk 418 is passed through optional field lens 416 and optional tube lens 414 and converged to the sample 426 by the objective lens 412.

Since the core diameter $D_F$ and the numerical aperture $NA_F$ of the fiber 705 have been selected to approximately follow the relation of equation 13, the etendue of light emitted from the distal end 706 of the multimode fiber 705 does not substantially exceed the etendue of light passing through the pinholes 420 of the pinhole array disk 418, thereby achieving efficient illumination of the sample 426.

A signal from the sample 426, for example a fluorescence signal, passes back through the objective lens 412, and is converged to the individual pinholes 420 of the pinhole array disk 418. The fluorescence signal passing through the individual pinholes 420 is passed through the beam combining module 404, so as to be imaged onto the sensor 440 of the imaging device 438 via the relay lenses 434 and 436.

It should be noted that the plane 814 of the aperture 808, the plane 448 in which the pick-off member 432 is fixed, and the back focal plane 446 of the microscope objective lens 412 are conjugate. It should also be noted that the plane 810 of the fiber tip 706, the first image plane 424, and the sample plane 428 are conjugate. That means that the lenses 806 and 430 form a relay optical device providing an image of the aperture 808 onto the pick-off member 432, and further onto the back focal plane 446 of the objective lens 412.

A minimal aperture diameter $D_{432}$ of the pick-off member 432 depends on a magnification of the image provided by relay optics 806 and 430, as defined by the respective focal lengths $F_{806}$ and $F_{430}$ of the lenses, and by a diameter $D_{808}$ of the aperture 808 as defined by the focal length $F_{804}$ of the lens 804:

$$D_{432} \geq D_{808} (F_{430}/F_{806}) = NA_F(F_{430} \cdot F_{804}/F_{806}) \qquad (21)$$

To achieve an effective coupling of the illumination light path with the microscope imaging light path and to avoid undesired loss of the illumination light, the aperture diameter $D_{432}$ of the pick-off member 432 should satisfy the equation 18.

The divergence angle $\theta_{434}$ of the illumination beam collimated by the collimating lens 434 is expressed in equation 22 as:

$$\theta_{434} \approx NA_F/(M_{802}M_{404}) = NA_F(F_{430}F_{804})/(F_{806}F_{434}) = NA_F(D_F/D_{418}) \qquad (22)$$

where $M_{802}$ is the magnification of the source module 802, and $M_{404}$ is the magnification of the beam combining module module 404.

As an alternative to the use of the beam combining module 404 for Köhler illumination and critical illumination, as illustrated in Figures 7 and 8, a beam combining module with a folding perforated mirror may be employed, as described with respect to Figure 6. This alternative is illustrated in the examples of Figures 9 and 10.

Figure 9 illustrates an example multiplexed confocal microscope system employing a perforated mirror for spatial combining of the illumination light path and the scattered light path, comprising an optical fiber as a flexible light delivery subsystem and configured to provide Köhler illumination of a sample.

Similarly to the example of Figure 4-1, the multiplexed confocal microscope system of Figure 9 comprises the light the multiplexed confocal microscope module 406 and the imaging module 408. The system of Figure 9 further comprises a combined light source and beam combining module 902. The combined module 902 comprises the light source 703 and the fiber optic light delivery subsystem 705 with a fiber distal end tip 706, as described previously with respect to the example of Figure 7. The combined module 902 also comprises the collimating lens 434 and the highly reflecting folding perforated mirror 632 with the small coupling window 633 for transmitting illumination light, as described previously with respect to the example of Figure 6.

As previously described, the perforated mirror 632 is placed so that the window 633 is fixed in the plane 448 conjugate to the back focal plane of the objective lens of the multiplexed confocal microscope module 406. The window 633 in the folding perforated mirror 632 works as a beam combining (pick-off) member. The distal end tip 706 of the fiber 705 is placed on the optical axis 401 of the combined light source and beam combining module 902, close to the window 633 of the mirror 632, such that the illumination light exiting the distal end 706 is transmitted to the multiplexed confocal microscope module 406.

After passing through the window 633 of mirror 632, the light may be collimated by means of the collimating lens 434, thereby providing a collimated or nearly collimated beam for illumination of the first image plane 424 of a multiplexed confocal microscope module 406, which coincides with the plane of the pinhole array disk 418 and the conjugated plane of the sample to be probed. The scattered imaging light from the multiplexed confocal microscope module 406 is reflected by the folding perforated mirror 632 toward the imaging module 408.

As described previously with respect to the example of Figure 7, the plane of the fiber tip 706 is conjugate to the back focal plane 446 of the microscope objective lens 412. This optical setup provides Köhler illumination of the sample.

Figure 10 illustrates an example multiplexed confocal microscope system employing a perforated mirror for spatial combining of the illumination light path and the scattered light path, comprising an optical fiber as a flexible light delivery subsystem and configured to provide critical illumination of a sample.

Similarly to the example of Figure 4-1, the multiplexed confocal microscope system of Figure 10 comprises the light the multiplexed confocal microscope module 406 and the imaging module 408. The system of Figure 10 further comprises a combined light source and beam combining module 1002. The combined module 1002 comprises the light source 703 and the fiber optic light delivery subsystem 705 with a fiber distal end tip 706, as described previously with respect to the example of Figure 7. The combined module 1002 also comprises the collimating lens 434 and the highly reflecting folding perforated mirror 632 with the small coupling window 633 for transmitting illumination light, as described previously with respect to the example of Figure 6.

As previously described, the perforated mirror 632 is placed so that the window 633 is fixed in the plane 448 conjugate to the back focal plane of the objective lens of the multiplexed confocal microscope module 406. The window 633 in the folding perforated mirror 632 works as a beam combining (pick-off) member.

In contrast to the combined light source and beam combining module 902, the module 1002 further comprises a lens 1004 having a short focal length $F_{1004}$. The distal end tip 706 of the fiber 705 is placed on the optical axis 401 of the combined module 1002. The fiber tip 706 and the lens 1004 may be positioned such that the lens 1004 is a distance $F_{1004}$ from the plane 448 (and the window 633 of the perforated mirror 632), and such that the fiber tip 706 is a distance $F_{1004}$ from the lens 1004. In this manner, the plane 448 will coincide with a Fourier plane of the lens 1004. The lenses 1004 and 434 form relay optics providing a magnified image of the distal end 706 of the fiber 705 laying in the plane 810 onto the first image plane 424 coinciding with the surface of the pinhole array disk 418, and to the sample plane, both conjugated to the second image plane 444 coinciding with the detection plane of the image sensor 440. This optical setup provides critical illumination of the sample 426.

The light emitted from the distal end 706 of the fiber 705 is imaged by means of the relay optics formed by the lenses 1004 and 434 to provide a nearly collimated beam for illumination of the first image plane 424 of a multiplexed confocal microscope module 406. The scattered imaging light from the multiplexed confocal microscope module 406 is reflected by the folding perforated mirror 632 toward the imaging module 408.

In all of the luminescent confocal microscope systems mentioned above, fluorescent dyes are used for specific labeling of the preparations. The number of dye signatures that may be used simultaneously, i.e., the number of characteristics, for example, of cells that can be investigated simultaneously, can be increased by means of the technology disclosed herein. When the spectral signatures of the individual dyes overlap extensively or are very close to one another, the detected wavelength range or numerical aperture should be limited, according to the prior art, for separate detection of the fluorescence signals of individual dyes. This reduces the sensitivity of detection, i.e., increases the noise of the detectors, because greater amplification must be used. This may be avoided by the methods and arrangements disclosed herein.

The technology disclosed herein may be used in image-generating confocal microscope systems as well as in analytic confocal microscope systems. The confocal microscope systems are episcopic image-generating systems such as multipoint confocal scanning microscopes for three-dimensional examination of biological preparations, fluorescence correlation microscopes for quantitative determination of molecular concentrations and for measuring molecular diffusions. They may be applied for fluorescence recovery after photobleaching (FRAP), fluorescence lifetime imaging (FLIM), structured illumination (SIM), super resolution and localization microscopy. Also included are methods based on fluorescence detection for screening dyes and methods for flow cytometry.

**Claims**

1. A system (400, 450, 500, 600, 700, 800, 900, 1000) comprising:

   a microscope having an objective lens (412);
   a scannable pinhole array disk (418);
   a spatial filter (432, 514, 632) placed at a conjugate plane (448) to a back aperture plane (446) at a back aperture of the objective lens;
   a light source to illuminate the spatial filter; and
   an array detector to record scattered light from a sample.

2. The system as recited in claim 1, wherein an area of the spatial filter is substantially smaller than an area of an image of the back aperture at the conjugate plane (448).

3. The system as recited in claim 1 or claim 2, wherein the spatial filter comprises a pick-off member (432).

4. The system as recited in claim 1 or claim 2, wherein the spatial filter comprises a convex mirror (514).

5. The system as recited in claim 1 or claim 2, wherein the spatial filter comprises a perforated mirror (632) having a window (633).

6. The system as recited in any one of claims 1 to 5, wherein the system comprises an adjustable iris centered around the spatial filter and placed at the conjugate plane (448).

7. The system as recited in any one of claims 1 to 6, wherein pinholes of the pinhole array disk (418) are arranged in a Nipkow pattern and the pinhole array disk is rotatable around an axis of the pinhole array disk.

8. The system as recited in any one of claims 1 to 7, wherein the light source comprises a laser light source (703).

9. The system as recited in claim 8, comprising one or more multimode optical fibers (705) coupled to the laser light source.

10. The system as recited in claim 9, comprising magnifying relay optics (804,806) positioned between the one or more multimode optical fibers and the spatial filter.

11. A method of episcopic multiplexed confocal scanning microscopy, the method comprising:

    using a spatial filter (432, 514, 632) to combine excitation light and emission light from a multiplexed confocal microscope module (406), the spatial filter placed at a conjugate plane (448) to a back aperture plane (446) at a back aperture of an objective lens (412).

12. The method as recited in claim 11, further comprising:

    adjusting an opening of an iris placed at the conjugate plane (448) and centered around the spatial filter (432, 514, 632) to match an area of an image of the back aperture at the conjugate plane (448).

13. The method as recited in claim 11, further comprising:

    imaging a tip (706) of an optical fiber (705) coupled to a laser light source (703) onto a first image plane (424) in which a scannable pinhole array disk (418) is located.

14. The method as recited in claim 11, further comprising:

    using magnifying relay optics (804,806) to image a tip (706) of an optical fiber (705) coupled to a laser light source (703) onto a plane (424) in which a scannable pinhole array disk (418) is located.

Figure 1
PRIOR ART

Figure 2
PRIOR ART

Figure 3

PRIOR ART

Figure 4-1

Figure 4-2

Figure 5

Figure 6

Figure 7

Figure 8

EP 2 720 074 A2

Figure 9

EP 2 720 074 A2

Figure 10

EP 2 720 074 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6888148 B
- DE 679547
- US 3229564 A
- US 4314763 A
- US 3926500 A
- US 4927254 A
- US 4806004 A
- JP 0420912 A
- US 5557452 A
- US 8275226 B
- US 20110134519 A

**Non-patent literature cited in the description**

- **T. CORLE ; G. KINO.** Confocal Scanning Optical Microscopy and Related Imaging Systems. Academic Press, 1996